# FASCICULE DE BREVET EUROPEEN

(11) **EP 1 482 162 B1**
(45) Date de publication et mention de la délivrance du brevet: **11.04.2007**
(21) Numéro de dépôt: 04291306.1
(22) Date de dépôt: 24.05.2004
(51) Int. Cl.: F02K 7/06, F02B 71/06

(54) **Moteur à détonations pulsées**
Pulsierender Detonationsmotor
Pulsed detonation engine

(30) Priorité: 28.05.2003 FR 0306489
(43) Date de publication de la demande: 01.12.2004
(73) Titulaire: MBDA France, 75116 Paris (FR)
(72) Inventeur: Daniau, Emeric, 18570 La Chapelle Saint Ursin (FR)
(74) Mandataire: Bonnetat, Christian

(56) Documents cités:
- DE-C- 947 655
- US-A1- 2002 139 106

## Description

La présente invention concerne un moteur à détonations pulsées, c'est-à-dire un moteur alternatif à combustion interne utilisant un régime de combustion supersonique (détonation) permettant de délivrer des vitesses de propagation très élevées.

Ce type de moteur trouve des applications notamment, quoique non exclusivement, dans les domaines aéronautique, spatial et militaire pour équiper des aéronefs, fusées, missiles, etc...

On sait que la détonation est un mode particulier de propagation d'une flamme qui résulte du couplage entre une onde de choc et un front de combustion, de sorte que l'onde de choc comprime la charge combustible (mélange carburant-comburant) située dans la chambre de combustion du moteur, pour l'amener au-delà de son point d'auto-inflammation et l'énergie libérée par la combustion assure en retour la pérennité de l'onde de choc. Le cycle de fonctionnement d'un tel moteur peut être ainsi réduit à trois temps :
- un premier temps relatif à la phase d'alimentation en mélange ou charge combustible ;
- un deuxième temps relatif à la phase de détonation assurant la compression et la libération de l'énergie chimique engendrée par la charge ; et
- un troisième temps relatif à la phase de détente des produits de détonation.

Structurellement, la chambre de combustion d'un tel moteur est définie par un tube de flamme fermé à une extrémité par un fond transversal (désigné mur de poussée) où prennent appui les produits issus de la détonation de la charge combustible pour engendrer la poussée, laquelle charge est introduite dans la chambre par un dispositif d'alimentation.

Bien évidemment, le déroulement des différentes phases du cycle de fonctionnement du moteur est un point potentiellement critique et, en particulier, la maîtrise de la phase d'alimentation qui peut influer très fortement sur la performance d'un tel moteur.

Actuellement, deux dispositifs de contrôle d'alimentation par injection sont principalement utilisés : à savoir, un dispositif aéro-acoustique qui utilise la surpression dans la chambre pour bloquer aérodynamiquement l'admission de la charge combustible et un dispositif électromécanique par vanne pilotée, soit usuelle et déplaçable en translation, soit rotative.

Bien que ces dispositifs d'alimentation soient largement utilisés, ils présentent néanmoins des inconvénients. En effet, le dispositif aéro-acoustique dépend des conditions d'injection du mélange combustible et, même s'il est d'une grande simplicité de réalisation, il ne permet pas une optimisation de l'admission pour toute la plage de fonctionnement du moteur, ce qui entraîne une dégradation des performances de celui-ci. Quant au dispositif électromécanique, il exige des vannes usuelles capables de passer de forts débits instantanés et, donc, coûteuses, ou des vannes rotatives qui, si elles sont bien adaptées en mode fusée, sont moins efficaces en fonctionnement aérobie. De plus, ces deux types de vannes compliquent fortement la conception du moteur dont la simplicité de réalisation reste l'un des points forts.

Les autres moteurs à détonations pulsées sont divulgués dans les documents DE-C-947655 et US-A-2002/139106.

La présente invention a pour but de remédier à ces inconvénients et concerne un moteur à détonations pulsées dont la conception est structurellement simple et garantit une grande sécurité de fonctionnement.

A cet effet, le moteur à détonations pulsées alimenté cycliquement par une charge combustible amenée dans la chambre de combustion d'un tube de flamme à fond transversal par un dispositif d'alimentation, est remarquable :
- en ce que ledit fond transversal du tube de flamme est monté mobile par rapport à celui-ci pour pouvoir occuper deux positions limites, une première position correspondant à la phase de détonation de la charge combustible dans la chambre de combustion dudit tube et une seconde position correspondant à la phase d'alimentation de la charge combustible dans ladite chambre ;
- en ce que, dans la paroi latérale dudit tube, au moins une ouverture d'alimentation de ladite charge combustible est prévue, qui est obturée et séparée de ladite chambre de combustion par ledit fond mobile, quand ce dernier occupe sa première position, et qui est en communication fluidique avec ladite chambre, quand ledit fond mobile occupe sa seconde position ; et
- en ce que, dans ladite première position, ledit fond transversal mobile est solidarisé dudit tube par des moyens de verrouillage libérables.

Ainsi, grâce à l'invention, le moteur s'affranchit de dispositifs d'alimentation complexes à vannes ou analogues, puisque c'est le fond transversal lui-même, formant le mur de poussée, qui impose le fonctionnement des deux phases d'alimentation et de détonation du moteur, par sa mobilité en ouvrant et fermant l'ouverture d'alimentation. En conséquence, le fond mobile, en assurant le contrôle et le bon fonctionnement des deux phases et leurs transitions, peut être considéré comme faisant partie intégrante du dispositif d'alimentation.

On remarque également que l'utilisation du fond transversal mobile pour le contrôle autonome de l'admission carburant-comburant dans la chambre de combustion est d'une grande simplicité mécanique garantissant une sécurité et une fiabilité de fonctionnement importantes, par ailleurs, sans apport d'énergie extérieure.

Par exemple, ledit fond transversal mobile peut coulisser par rapport audit tube entre les deux dites positions et/ou il peut tourner par rapport audit tube entre les deux positions.

Ledit fond transversal peut présenter avantageusement la forme d'un piston à paroi transversale tournée vers ladite chambre et à jupe latérale coopérant avec la paroi dudit tube pour obturer ladite ouverture d'alimentation dans la première position dudit fond, et lesdits moyens de verrouillage libérables comportent alors un bloc interne logé dans ledit piston de façon coulissante et traversant sa paroi transversale pour déboucher dans ladite chambre de combustion, ainsi qu'au moins un galet de verrouillage soumis au déplacement dudit bloc et pouvant traverser radialement la jupe latérale dudit piston pour s'engager dans un logement de réception dudit tube et bloquer ledit fond.

En variante, ledit fond transversal mobile peut être monté rotatif sur un piston disposé dans ledit tube de flamme et être pourvu de tenons de verrouillage périphériques aptes à coopérer, dans ladite première position, avec des logements de verrouillage, pratiqués dans ledit tube de flamme et en communication avec ladite chambre de combustion, et, sous l'effet d'une détonation, ledit fond transversal mobile peut tourner par rapport audit piston, inhibant la coopération des tenons de verrouillage et des logements de verrouillage et permettant audit piston de prendre ladite seconde position.

Par ailleurs, dans ledit tube, est prévue une butée interne pour marquer la première position dudit fond mobile. De préférence, ladite butée interne se présente sous la forme d'un épaulement annulaire interne issu de la paroi latérale dudit tube et contre lequel s'applique le piston dudit fond mobile dans sa première position.

Selon une autre caractéristique, des moyens élastiques de rappel sont prévus dans ledit tube pour ramener ledit fond mobile de sa seconde position vers sa première position. Ces moyens élastiques de rappel comportent par exemple au moins un ressort agissant sur le bloc interne dudit fond mobile.

De plus, ladite ouverture latérale d'alimentation est de préférence agencée de façon adjacente à ladite butée interne.

Par ailleurs, le moteur peut comporter un dispositif d'allumage qui, avantageusement, utilise le mouvement de va-et-vient dudit fond transversal mobile pour amorcer cycliquement la charge combustible.

Dans un mode préféré de réalisation, quoique non exclusif, ledit dispositif d'allumage est du type piézo-électrique et comporte, par exemple, une masselotte mobile liée audit fond transversal mobile, un dispositif de retenue apte à maintenir en position armée ladite masselotte, un élément élastique de rappel de ladite masselotte en position de percussion par suite de la libération dudit dispositif de retenue, et un organe piézo-électrique engendrant un courant électrique pour amorcer ladite charge combustible quand ladite masselotte vient en position de percussion.

Les figures du dessin annexé feront bien comprendre comment l'invention peut être réalisée. Sur ces figures, des références identiques désignent des éléments semblables.

La figure 1 est une vue schématique en coupe longitudinale d'un premier exemple de réalisation du moteur à détonations pulsées conforme à l'invention, montrant le fond mobile dans la première position.

La figure 2 est une vue analogue à la précédente montrant le fond mobile dudit moteur dans sa seconde position.

La figure 3 montre schématiquement, en coupe et perspective, l'intérieur du tube de flamme d'un second exemple de réalisation de la présente invention.

Les figures 4 et 5 montrent, schématiquement et respectivement, les première et seconde positions du fond transversal mobile du tube de flamme de la figure 3.

La figure 6 est une vue schématique d'un dispositif d'allumage dudit moteur, représentant selon deux demi-coupes inférieure et supérieure, ses deux positions extrêmes de fonctionnement.

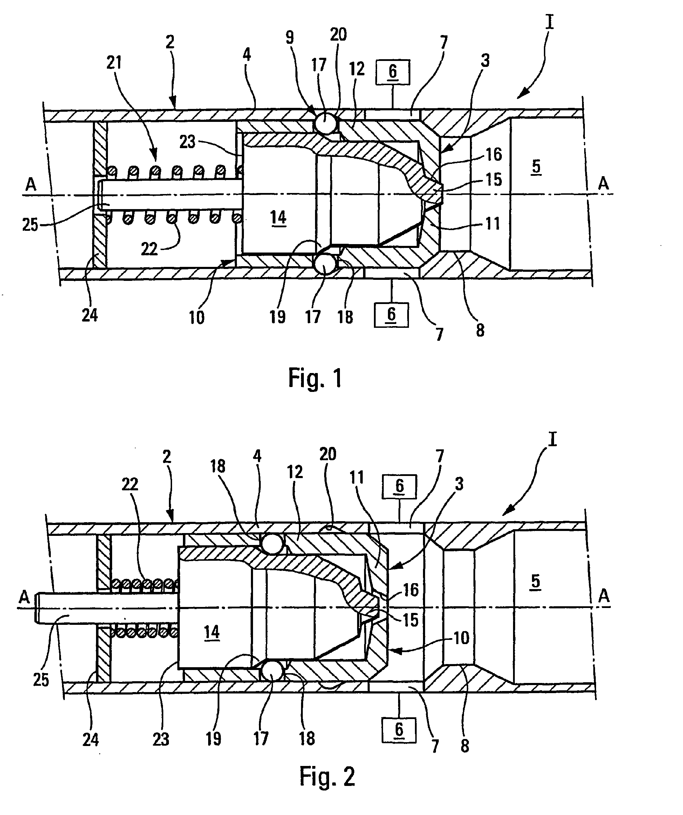

Le moteur à détonations pulsées I, représenté schématiquement et partiellement sur les figures 1 et 2, comprend un tube de flamme 2 cylindrique à axe longitudinal A, et un fond transversal 3 logé avec ajustement à l'intérieur du tube de flamme 2. Ce fond transversal 3 délimite, avec la paroi latérale 4 du tube 2, une chambre de combustion 5 en partie illustrée, apte à recevoir cycliquement une charge combustible issue d'un dispositif d'alimentation symbolisé en 6 par un rectangle, fournissant le mélange carburant-comburant. Le fond transversal 3 définit le mur de poussée contre lequel s'appliquent les produits de détonation de la charge combustible pour engendrer la poussée.

Selon l'invention, le fond transversal 3 est monté mobile par rapport au tube de flamme 2 du moteur I et peut se déplacer entre deux positions limites distinctes, une première position (figure 1) isolant la chambre de combustion 5 du dispositif d'alimentation 6, correspondant à la phase de détonation de la charge combustible, et une seconde position (figure 2) mettant en communication fluidique le dispositif d'alimentation et la chambre de combustion, correspondant à la phase d'alimentation de la chambre par la charge combustible.

Pour cela, des ouvertures 7 pour l'admission de la charge combustible, à partir du dispositif d'alimentation 6, dans la chambre 5 sont ménagées dans la paroi latérale 4 du tube de flamme, lesquelles ouvertures 7 sont obturées quand le fond transversal mobile 3 est dans sa première position, et dégagées lorsqu'il occupe sa seconde position. Ainsi, le fond mobile 3 permet de séparer et de mettre en communication l'entrée du mélange de la chambre de combustion 5 à la manière des vannes de l'art antérieur, contrôlant le dispositif d'alimentation.

Comme le montrent les deux figures, le déplacement du fond transversal 3 entre ses deux positions est, dans ce mode préféré de réalisation, du type coulissant, selon l'axe longitudinal A, mais il pourrait être du type rotatif, voire hélicoïdal. Ainsi, pour marquer la première position du fond coulissant 3, un épaulement annulaire interne 8 est prévu dans la paroi latérale 4 du tube, de sorte que le fond s'applique contre celui-ci 8 par leurs bords chanfreinés à chaque cycle de fonctionnement du moteur, en définissant son «point mort haut». Et pour maintenir le fond coulissant 3 dans cette première position durant la phase de détonation du moteur, des moyens de verrouillage libérables 9 sont prévus pour associer temporairement le fond transversal coulissant 3 au tube 4.

Dans la réalisation illustrée, le fond transversal 3 se présente structurellement sous la forme d'un piston 10 composé, de façon usuelle, d'une paroi transversale 11 tournée vers la chambre de combustion et d'une jupe latérale 12 qui coopère, avec ajustement, avec la paroi latérale 4 du tube 2. De cette façon, sur la figure 1, la jupe latérale 12 du piston obture les ouvertures d'admission ou d'alimentation 7 en mélange combustible, lesquelles sont ménagées dans le tube 2 de façon adjacente à l'épaulement annulaire interne 8.

A l'intérieur du piston 10 se trouve un bloc ou corps interne 14 cylindrique coopérant avec la jupe latérale 12 du piston et dont une extrémité 15 est conique pour s'engager dans un trou axial 16 correspondant ménagé au centre de la paroi transversale 11 du piston et déboucher ainsi dans la chambre de combustion 5. On comprend donc que ce bloc est axialement déplaçable par rapport au piston sous l'action des gaz de détonation. Par ailleurs, comme le montre la figure 1, des galets ou billes de verrouillage 17 sont reçus dans des passages radiaux 18 de la jupe latérale du piston et s'engagent en partie, sous l'action d'un épaulement conique 19 formant rampe, prévu à la périphérie du bloc 14, dans des logements de réception 20 ménagés en correspondance dans la paroi latérale 4 du tube 2. Deux galets 17 sont représentés sur la figure 1 mais leur nombre pourrait être différent. L'ensemble formé par le bloc interne 14 et les galets 17 définit les moyens de verrouillage 9 pour immobiliser le piston 10, c'est-à-dire le fond transversal 3, dans sa première position.

En outre, des moyens élastiques de rappel 21 sont prévus entre le fond transversal mobile 3 et le tube 2, du côté opposé à la chambre 5, pour ramener spontanément ledit fond de sa seconde position (figure 2) vers sa première position (figure 1) verrouillée. Par exemple, ces moyens sont simplement définis par un ressort de compression 22 disposé entre l'extrémité 23 du bloc, opposée à l'extrémité conique 15, et un appui transversal 24 prévu dans le tube 2. De façon usuelle, une tige de guidage 25 du ressort, issue de l'extrémité 23 dudit bloc, peut être associée audit ressort.

Le cycle de fonctionnement d'un tel moteur à détonations pulsées décrit ci-dessus est le suivant.

Tout d'abord, on suppose que le moteur I se trouve dans la configuration illustrée sur la figure 1 pour laquelle le fond transversal mobile 3 est dans sa première position, c'est-à-dire :
- est en appui contre l'épaulement annulaire interne 8 du tube 2, sous l'action du ressort 22, et assure l'étanchéité de la chambre de combustion 5 par la coopération des bords chanfreinés du piston 10 et de l'épaulement 8 ;
- obture les ouvertures d'admission 7 du tube par la jupe latérale 12 du piston 10, de sorte que la chambre de combustion 5 est séparée de l'entrée du mélange issu du dispositif d'alimentation 6 ; et
- est verrouillé dans cette position par les galets de verrouillage 1 7 traversant partiellement sa jupe latérale 12 et engagés dans les logements de réception 20 du tube, grâce à l'action de la rampe conique 19 du bloc 14 poussé par le ressort 22 et obturant, par son extrémité 15, le trou 16.

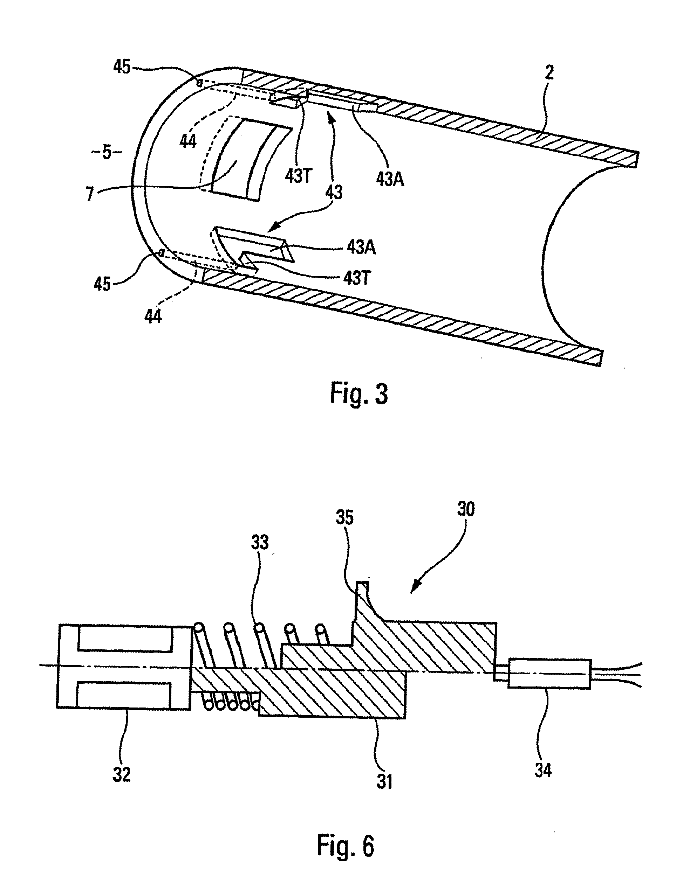

Lorsque la détonation du mélange combustible comprimé dans la chambre 5 se produit, par l'intermédiaire d'un dispositif d'allumage qui sera décrit en regard de la figure 3, la pression augmente fortement dans la chambre, mais le piston 10 du fond 3, formant le mur de poussée, est bloqué en position par les galets de verrouillage 17, et ne peut donc reculer. En revanche, les gaz de détonation sont au contact de l'extrémité conique 15 du bloc interne 14, qui débouche dans la chambre 5 à travers le trou central 16 de la paroi transversale 11 du piston, et agissent sur le bloc qui, par la pression engendrée, recule et commence à comprimer le ressort 22. Durant son mouvement axial de recul, les galets de verrouillage 17 suivent la rampe conique 19 du bloc 14 et quittent ainsi les logements 20 du tube de flamme 2 pour être reçus dans les passages radiaux 18 du piston.

La pression dans la chambre de combustion 5 est provisoirement tombée sous l'effet de la détente arrière des produits de détonation et, comme le fond mobile 3 n'est plus verrouillé, il peut donc reculer librement, avec le bloc interne 14, vers la gauche sur la figure 1 à l'encontre du ressort, sous l'effet de la surpression résiduelle qui règne dans la chambre. Simultanément, la jupe latérale 12 du piston 10 découvre les ouvertures d'admission 7 du tube 2 et le fond mobile 3 atteint alors sa seconde position illustrée sur la figure 2, comprimant le ressort 22 disposé entre l'appui 24 du tube et l'extrémité 23 du bloc.

Les ouvertures d'admission 7 du tube de flamme 2 sont entièrement dégagées lors de la phase de dépression provoquée par la sur-expansion des produits de détonation. Et un phénomène d'auto-aspiration permet en conséquence le remplissage autonome de la chambre de combustion 5 du moteur en mélange carburant-oxydant du dispositif d'alimentation.

Puis, sous l'action du ressort de compression 22, le bloc interne 14 et le piston mobile 10 sont renvoyés vers la chambre, le piston obturant les ouvertures d'admission 7 et venant en butée axiale contre l'épaulement 8 du tube, tandis que les galets de verrouillage 17, sous l'action de la rampe conique 19, se réengagent dans les logements 20 du tube en immobilisant le fond 3 dans sa première position.

Un nouveau cycle de fonctionnement du moteur I peut débuter.

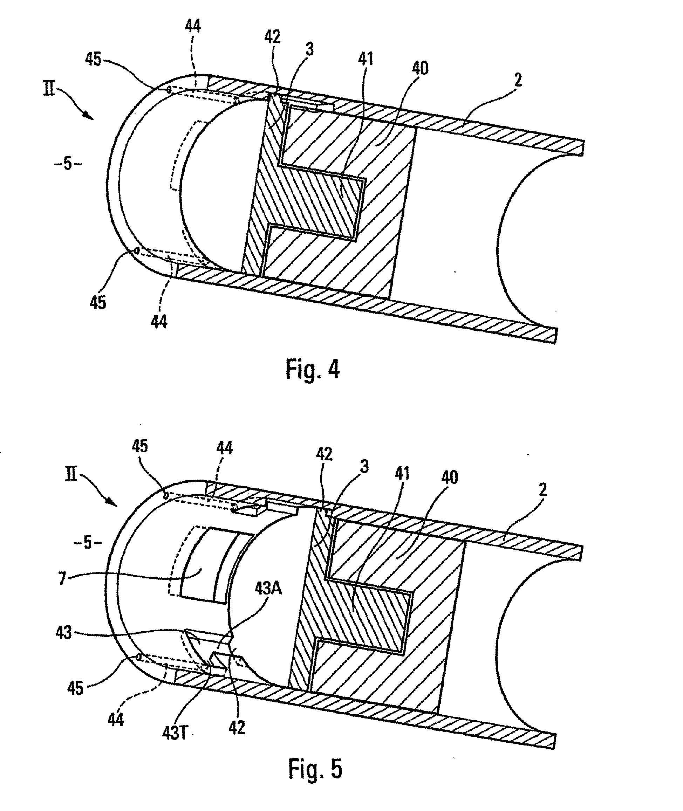

Dans le mode de réalisation II des figures 3, 4 et 5, le fond transversal immobile 3 du tube de flamme 2 est monté rotatif sur un piston 40 disposé dans ce dernier, par exemple au moyen d'un arbre axial 41 chargé élastiquement (de façon connue non représentée). A sa périphérie, le fond transversal mobile 3 est pourvu de tenons de verrouillage 42, aptes à coopérer, dans ladite première position (figure 4), avec des logements de verrouillage 43 pratiqués dans l'épaisseur dudit tube de flamme 2. Chaque logement de verrouillage 43 présente la forme d'un L avec une branche axiale 43A et une branche transversale 43T. Chaque branche transversale 43T est en communication avec la chambre de combustion 5 par un conduit 44, débouchant en 45 du côté de cette dernière.

La séquence de fonctionnement du moteur II des figures 3 à 5 est la suivante :
- l'ensemble du fond transversal mobile 3 et du piston 40 étant dans la première position (figure 4), les tenons de verrouillage 42 sont en appui dans les branches transversales 43T des logements de verrouillage 43 sous l'action de la charge élastique dudit arbre axial 41 et les ouvertures d'alimentation 7 sont obturées ;
- lorsque la détonation de la charge combustible présente dans la chambre de combustion 5 est amorcée, la pression augmente fortement dans ladite chambre, mais le fond transversal mobile 3 et le piston 40 sont bloqués par les tenons de verrouillage 42 et ne peuvent reculer ;
- cependant, lorsque la détonation qui balaie la chambre de combustion 5 arrive à la hauteur des orifices 45 des conduits 44, une partie des gaz sous pression est captée et dirigée vers les logements de verrouillage 43 ;
- sous l'action de la surpression dans lesdits logements de verrouillage 43, les tenons 42 sont chassés latéralement hors des branches transversales 43T à l'encontre de l'action de la charge élastique de l'arbre axial 41, de sorte que le fond transversal mobile 3 tourne par rapport au piston 40 et déverrouille ce dernier ;
- l'ensemble du fond transversal mobile 3 et du piston 40 peut donc reculer librement sous l'effet de la surpression résiduelle pour prendre ladite seconde position et dévoiler les ouvertures d'alimentation 7, lesdits tenons 42 suivant les branches axiales 43A des logements 43 ;
- lesdites ouvertures d'alimentation 7 sont entièrement ouvertes lors de la phase de dépression causée par la sur-expansion des produits de détonation, le phénomène d'auto-aspiration permettant le remplissage autonome de la chambre de combustion 5 en mélange carburant-oxydant ;
- sous l'action du ressort de rappel 21 (non représenté sur les figures 3 à 5), l'ensemble du fond mobile 3 et du piston 40 est renvoyé vers l'avant, les tenons de verrouillage 42 suivent les branches axiales 43A des logements 43 et, arrivés en butée avant, pénètrent dans les branches transversales 43 sous l'action de la charge élastique de l'arbre axial 41 faisant tourner le fond 3 de façon limitée.

Le moteur II est donc alors de nouveau dans sa première position, prêt pour un nouveau cycle.

En plus des avantages préalablement mentionnés conférés par le fond mobile (alimentation et découplage chambre de combustion - entrée d'air), le mouvement alternatif du mur de poussée peut être également exploité pour produire de l'énergie utilisable pour assurer l'amorçage de la charge combustible ou pour couvrir en partie les besoins électriques de l'engin motorisé.

Tel est notamment le cas du dispositif d'allumage 30 représenté sur la figure 3, qui utilise, par des moyens 31, 32, 33, 34, le mouvement alternatif du fond mobile transversal 3 pour amorcer cycliquement la charge combustible.

Dans la réalisation illustrée, ce dispositif 30 est du type piézo-électrique mais il pourrait être par bobine d'induction ou autre. Structurellement, les moyens du dispositif comprennent une masselotte mobile 31, un dispositif de retenue 32 tel que, dans cet exemple, un électro-aimant, un élément élastique 33 et un organe piézo-électrique 34.

La masselotte 31 est munie d'un ergot 35 pour sa liaison avec le fond mobile 3 (non représenté), et elle est disposée entre l'électro-aimant 32 et l'organe piézo-électrique 34 pour son déplacement alternatif parallèlement à l'axe A entre deux positions respectives.

La première position de la masselotte 31 correspond à la demi-vue inférieure de la figure 3 pour laquelle la masselotte 31, amenée par le recul du fond mobile via l'ergot 35, est armée et liée à l'électro-aimant 32 grâce au courant d'alimentation circulant dans celui-ci. Dans cette position armée pour laquelle le fond mobile est dans sa seconde position (figure 2), l'élément élastique 33 tel qu'un ressort de compression, situé entre l'électro-aimant et la masselotte, est comprimé et la masselotte est éloignée de l'organe piézo-électrique. Dans cet exemple, le dispositif de retenue 32 de la masselotte est du type électrique mais il pourrait être du type mécanique.

La seconde position de la masselotte 31 correspond à la demi-vue supérieure de la figure 3 pour laquelle la masselotte est libérée du dispositif de retenue et vient percuter le cristal de l'organe piézo-électrique 34, par suite de la rupture du courant d'alimentation de l'électro-aimant 32 et de l'action de l'élément élastique 33. Son contact avec l'organe piézo-électrique 34 engendre un courant haute tension utilisé pour l'allumage du moteur, c'est-à-dire l'amorçage de la charge combustible, quand le fond mobile 3 est dans sa première position (figure 1).

Par ailleurs, la demanderesse a constaté que le mur de poussée mobile permet aussi un meilleur contrôle de la poussée en lissant le caractère impulsionnel de la détonation et en atténuant l'environnement vibratoire susceptible d'être engendré par un tel moteur, ce qui ne peut que faciliter l'intégration de ce type de moteur dans des cellules aéronautiques.

## Revendications

1. Moteur à détonations pulsées alimenté cycliquement par une charge combustible amenée dans la chambre de combustion (5) d'un tube de flamme (2) à fond transversal (3) par un dispositif d'alimentation (6),
**caractérisé :**
- **en ce que** ledit fond transversal (3) du tube de flamme (2) est monté mobile par rapport à celui-ci pour pouvoir occuper deux positions limites, une première position correspondant à la phase de détonation de la charge combustible dans la chambre de combustion (5) dudit tube et une seconde position correspondant à la phase d'alimentation de la charge combustible dans ladite chambre;
- **en ce que**, dans la paroi latérale (4) dudit tube, au moins une ouverture d'alimentation (7) de ladite charge combustible est prévue, qui est obturée et séparée de ladite chambre de combustion (5) par ledit fond mobile (3), quand ce dernier occupe sa première position, et qui est en communication fluidique avec ladite chambre (5), quand ledit fond mobile (3) occupe sa seconde position ; et
- **en ce que**, dans ladite première position, ledit fond transversal mobile (3) est solidarisé dudit tube (2) par des moyens de verrouillage libérables (9 ; 42, 43).

2. Moteur selon la revendication 1,
**caractérisé en ce que** ledit fond transversal mobile (3) coulisse par rapport audit tube (2) entre les première et seconde positions.

3. Moteur selon l'une des revendications 1 ou 2,
**caractérisé en ce que** ledit fond transversal mobile (3) tourne par rapport audit tube (2) entre les première et seconde positions.

4. Moteur selon les revendications 1 et 2,
**caractérisé en ce que** ledit fond transversal mobile (3) présente la forme d'un piston (10) à paroi transversale (11) tournée vers ladite chambre et à jupe latérale (12) coopérant avec la paroi (4) dudit tube pour obturer ladite ouverture d'alimentation (7) dans la première position dudit fond, et **en ce que** lesdits moyens de verrouillage libérables (9) comportent un bloc interne (14) logé dans ledit piston (10) de façon coulissante et traversant sa paroi transversale (11) pour déboucher dans ladite chambre de combustion (5), ainsi qu'au moins un galet de verrouillage (17) soumis au déplacement dudit bloc et pouvant traverser radialement la jupe latérale (12) dudit piston pour s'engager dans un logement de réception (20) dudit tube et bloquer ledit fond.

5. Moteur selon les revendications 1, 2 et 3,
**caractérisé en ce que** ledit fond transversal mobile (3) est monté rotatif sur un piston (40) disposé dans ledit tube de flamme (2) et est pourvu de tenons de verrouillage périphériques (42) aptes à coopérer, dans ladite première position, avec des logements de verrouillage (43), pratiqués dans ledit tube de flamme et en communication avec ladite chambre de combustion (5), et **en ce que**, sous l'effet d'une détonation, ledit fond transversal mobile (3) tourne par rapport audit piston (40), inhibant la coopération des tenons de verrouillage (42) et des logements de verrouillage (43) et permettant audit piston (40) de prendre ladite seconde position.

6. Moteur selon l'une quelconque des revendications 1 à 5,
**caractérisé en ce que**, dans ledit tube (2), est prévue une butée interne (8) pour marquer la première position dudit fond mobile.

7. Moteur selon la revendication 6,
**caractérisé en ce que** ladite butée interne se présente sous la forme d'un épaulement annulaire interne (8) issu de la paroi latérale (4) dudit tube (2) et contre lequel s'applique le piston dudit fond mobile (3) dans sa première position.

8. Moteur selon l'une quelconque des revendications 1 à 7,
**caractérisé en ce que** des moyens élastiques de rappel (21) sont prévus dans ledit tube (2) pour ramener ledit fond mobile (3) de sa seconde position vers sa première position.

9. Moteur selon la revendication 8,
**caractérisé en ce que** lesdits moyens élastiques de rappel (21) comportent au moins un ressort (22) agissant sur le bloc dudit corps mobile (3).

10. Moteur selon la revendication 6,
**caractérisé en ce que** ladite ouverture latérale d'alimentation (7) est agencée de façon adjacente à ladite butée interne (8).

11. Moteur selon l'une quelconque des revendications 1 à 10, du type comportant un dispositif d'allumage,
**caractérisé en ce que** ledit dispositif d'allumage (30) comprend des moyens (31, 32, 33, 34) pour utiliser le mouvement de va-et-vient dudit fond transversal mobile (3) et amorcer cycliquement la charge combustible.

12. Moteur selon la revendication 11,
**caractérisé en ce que** ledit dispositif d'allumage (30) est du type piézo-électrique et comporte une masselotte mobile (31) liée audit fond transversal mobile, un dispositif de retenue (32) apte à maintenir en position armée ladite masselotte, un élément élastique (33) de rappel de ladite masselotte en position de percussion par suite de la libération dudit dispositif de retenue, et un organe piézo-électrique (34) engendrant un courant électrique pour amorcer ladite charge combustible quand ladite masselotte vient en position de percussion.

## Claims

1. A pulsed detonation engine supplied cyclically with a combustible charge fed into the combustion chamber (5) of a flame tube (2) with a transverse base (3) by a supply device (6), **characterized:**
- **in that** said transverse base (3) of the flame tube (2) is mounted so that it can move with respect to the latter in order to be able to occupy two boundary positions, a first position corresponding to the detonation phase of the combustible charge in the combustion chamber (5) of said tube and a second position corresponding to the phase wherein the combustible charge is supplied to said chamber;
- **in that** at least one supply opening (7) for said combustible charge is provided in the lateral wall (4) of said tube, this opening being closed off and separated from said combustion chamber (5) by said movable base (3) when the latter is occupying its first position and being in fluid communication with said chamber (5) when said movable base (3) is occupying its second position; and
- **in that**, in said first position, said transverse movable base (3) is secured to said tube (2) by releasable locking means (9; 42, 43).

2. The engine as claimed in claim 1, **characterized in that** said transverse movable base (3) slides with respect to said tube (2) between the first and second positions.

3. The engine as claimed in either of claims 1 and 2, **characterized in that** said transverse movable base (3) rotates with respect to said tube (2) between the first and second positions.

4. The engine as claimed in claims 1 and 2, **characterized in that** said transverse movable base (3) takes the form of a piston (10) with a transverse wall (11) facing said chamber and with a lateral skirt (12) cooperating with the wall (4) of said tube in order to close off said supply opening (7) in the first position of said base, and **in that** said releasable locking means (9) comprise an internal block (14) housed in said piston (10) in a sliding manner and passing through its transverse wall (11) so as to emerge in said combustion chamber (5), and also at least one locking roller (17) subjected to the movement of said block and being able to pass radially through the lateral skirt (12) of said piston in order to engage in a reception housing (20) of said tube and to immobilize said base.

5. The engine as claimed in claims 1, 2 and 3, **characterized in that** said transverse movable base (3) is mounted rotationally on a piston (40) arranged in said flame tube (2) and is provided with peripheral locking tenons (42) which are able to cooperate, in said first position, with locking housings (43) which are made in said flame tube and are in communication with said combustion chamber (5), and **in that**, through the effect of a detonation, said transverse movable base (3) rotates with respect to said piston (40), inhibiting the cooperation of the locking tenons (42) and the locking housings (43) and enabling said piston (40) to assume said second position.

6. The engine as claimed in any one of claims 1 to 5, **characterized in that** an internal stop (8) is provided in said tube (2) in order to mark the first position of said movable base.

7. The engine as claimed in claim 6, **characterized in that** said internal stop takes the form of an internal annular shoulder (8) emanating from the lateral wall (4) of said tube (2) and against which the piston of said movable base (3) is applied in its first position.

8. The engine as claimed in any one of claims 1 to 7, **characterized in that** elastic return means (21) are provided in said tube (2) in order to return said movable base (3) from its second position toward its first position.

9. The engine as claimed in claim 8, **characterized in that** said elastic return means (21) comprise at least one spring (22) acting on the block of said movable body (3).

10. The engine as claimed in claim 6, **characterized in that** said lateral supply opening (7) is disposed adjacently to said internal stop (8).

11. The engine as claimed in any one of claims 1 to 10, of the type comprising an ignition device, **characterized in that** said ignition device (30) comprises means (31, 32, 33, 34) for using the reciprocating movement of said transverse movable base (3) and cyclically igniting the combustible charge.

12. The engine as claimed in claim 11, **characterized in that** said ignition device (30) is of the piezoelectric type and comprises a movable weight (31) connected to said transverse movable base, a retaining device (32) which is able to maintain said weight in the primed position, an elastic element (33) for returning said weight to the percussion position subsequent to the release of said retaining device, and a piezoelectric member (34) generating an electrical current in order to ignite said combustible charge when said weight comes into the percussion position.

## Patentansprüche

1. Pulsierender Detonationsmotor, der zyklisch mit einer Brennladung gespeist wird, die durch eine Zufuhrvorrichtung (6) in die Brennkammer (5) eines Flammrohrs (2) mit Querboden (3) geführt wird, **dadurch gekennzeichnet,**
- **dass** der Querboden (3) des Flammrohrs (2) in Bezug auf dieses beweglich montiert ist, um zwei Grenzpositionen einnehmen zu können, wobei eine erste Position der Phase der Detonation der Brennladung in der Brennkammer (5) des Rohrs entspricht und wobei eine zweite Position der Phase der Zufuhr der Brennladung in die Kammer entspricht;
- **dass** in der Seitenwand (4) des Rohrs mindestens eine Öffnung (7) zur Zufuhr der Brennladung vorgesehen ist, die durch den beweglichen Boden (3) verschlossen und von der Brennkammer (5) getrennt ist, wenn sich der Boden in seiner ersten Position befindet, und die in Fluidverbindung mit der Kammer (5) steht, wenn der bewegliche Boden (3) seine zweite Position einnimmt; und
- **dass** in der ersten Position der bewegliche Querboden (3) durch lösbare Verriegelungsmittel (9; 42, 43) mit dem Rohr (2) fest verbunden ist.

2. Motor nach Anspruch 1,
**dadurch gekennzeichnet, dass** der bewegliche Querboden (3) in Bezug auf das Rohr (2) zwischen der ersten und zweiten Position gleitet.

3. Motor nach einem der Ansprüche 1 oder 2,
**dadurch gekennzeichnet, dass** sich der bewegliche Querboden (3) in Bezug auf das Rohr (2) zwischen der ersten und zweiten Position dreht.

4. Motor nach den Ansprüchen 1 und 2,
**dadurch gekennzeichnet, dass** der bewegliche Querboden (3) die Form eines Kolbens (10) mit einer zur Kammer hin gewandten Querwand (11) und einem seitlichen Mantel (12) aufweist, der mit der Wand (4) des Rohrs zusammenarbeitet, um die Zufuhröffnung (7) in der ersten Position des Bodens zu verschließen, und dass die lösbaren Verriegelungsmittel (9) umfassen: einen inneren Block (14), der im Kolben (10) auf gleitende Weise untergebracht ist und der seine Querwand (11) durchdringt, um in der Brennkammer (5) zu münden, sowie mindestens eine Verriegelungsrolle (17), die der Bewegung des Blocks unterworfen ist und die den seitlichen Mantel (12) des Kolbens radial durchdringen kann, um in eine Aufnahmeeinlassung (20) des Rohrs einzugreifen und den Boden zu blockieren.

5. Motor nach den Ansprüchen 1, 2 und 3,
**dadurch gekennzeichnet, dass** der bewegliche Querboden (3) an einem Kolben (40) drehbar montiert ist, der im Flammrohr (2) angeordnet ist, und mit Verriegelungszapfen am Umfang (42) versehen ist, die in der Lage sind, in der ersten Position mit Verriegelungsaufnahmen (43) zusammenzuarbeiten, die im Flammrohr gebildet sind und mit der Brennkammer (5) in Verbindung sind, und dass sich der bewegliche Querboden (3) unter der Einwirkung einer Detonation in Bezug auf den Kolben (40) dreht, was die Zusammenwirkung der Verriegelungszapfen (42) und der Verriegelungsaufnahmen (43) löst und es dem Kolben (40) erlaubt, die zweite Position einzunehmen.

6. Motor nach einem der Ansprüche 1 bis 5,
**dadurch gekennzeichnet, dass** im Rohr (2) ein innerer Anschlag (8) vorgesehen ist, um die erste Position des beweglichen Bodens zu markieren.

7. Motor nach Anspruch 6,
**dadurch gekennzeichnet, dass** der innere Anschlag die Form einer inneren ringförmigen Schulter (8) aufweist, die aus der Seitenwand (4) des Rohrs (2) hervorgeht und gegen die der Kolben des beweglichen Bodens (3) in seiner ersten Position drückt.

8. Motor nach einem der Ansprüche 1 bis 7,
**dadurch gekennzeichnet, dass** elastische Rückstellmittel (21) im Rohr (2) vorgesehen sind, um den beweglichen Boden (3) aus seiner zweiten Position in seine erste Position zurückzuholen.

9. Motor nach Anspruch 8,
**dadurch gekennzeichnet, dass** die elastischen Rückstellmittel (21) mindestens eine Feder (22) umfassen, die auf den Block des beweglichen Körpers (3) einwirkt.

10. Motor nach Anspruch 6,
**dadurch gekennzeichnet, dass** die seitliche Zufuhröffnung (7) angrenzend an den inneren Anschlag (8) gebildet ist.

11. Motor nach einem der Ansprüche 1 bis 10, von dem Typ, der eine Zündvorrichtung umfasst,
**dadurch gekennzeichnet, dass** die Zündvorrichtung (30) Mittel (31, 32, 33, 34) umfasst, um die hin- und hergehende Bewegung des beweglichen Querbodens (3) zu nutzen und die Brennladung zyklisch zu zünden.

12. Motor nach Anspruch 11,
**dadurch gekennzeichnet, dass** die Zündvorrichtung (30) vom piezoelektrischen Typ ist und umfasst: ein bewegliches Gewicht (31), das mit dem beweglichen Querboden verbunden ist, eine Rückhaltevorrichtung (32), die in der Lage ist, das Gewicht in der geladenen Position zu halten, ein elastisches Element (33) zur Rückstellung des Gewichts in die Schlagposition infolge der Freigabe des Rückhaltemittels und ein piezoelektrisches Organ (34), das einen elektrischen Strom erzeugt, um die Brennladung zu zünden, wenn das Gewicht in die Schlagposition gelangt.
